# EUROPÄISCHE PATENTANMELDUNG

(11) **EP 1 978 463 A2**
(43) Veröffentlichungstag der Anmeldung: **08.10.2008**
(21) Anmeldenummer: 08075092.0
(22) Anmeldetag: 06.02.2008
(51) Int. Cl.: G06F 21/00, G06F 21/02

(54) **Sicherheitsmodul für eine Frankiermaschine**

(30) Priorität: 02.04.2007 DE 102007016170
(71) Anmelder: Francotyp-Postalia GmbH, 16547 Birkenwerder (DE)
(72) Erfinder: Baum, Volker, 13189 Berlin (DE); Rosenau, Dirk, 13469 Berlin (DE)
(74) Vertreter: Jungblut, Bernhard Jakob

(57) **Zusammenfassung**

Die Erfindung betrifft ein Sicherheitsmodul für die elektronische Datenverarbeitung, mit einem Sicherheitskern umfassend einen Kernprozessor, sowie hiermit verbunden, einen Kernspeicher und ein Kerninterface, wobei der Kernprozessor dafür eingerichtet ist, Programme/Datensätze , über das Kerninterface zu importieren, zu verifizieren und bei erfolgreicher Verifikation im Kernspeicher zu speichern und zu aktivieren. Sie ist dadurch gekennzeichnet, dass der Sicherheitskern über das Kerninterface mit einem außerhalb des Sicherheitskernes angeordneten Massenspeicher des Sicherheitsmoduls verbunden ist, wobei die Speicherkapazität des Massenspeichers ein Vielfaches der Speicherkapazität des Kernspeichers beträgt, dass der Kernprozessor dazu eingerichtet ist, in den Massenspeicher geladene Programme/Datensätze für eine Programmausführung partitioniert in den Kernspeicher zu importieren, zu verifizieren und zu aktivieren, und dass der Kernprozessor dafür eingerichtet ist, für die Programmausführung nicht benötigte und in dem Kernspeicher gespeicherte partitionierte Programme/Datensätze zu authentifizieren und in den Massenspeicher zu exportieren und/oder im Kernspeicher zu löschen.

## Beschreibung

### Gebiet der Erfindung

Die Erfindung betrifft ein Sicherheitsmodul für die elektronische Datenverarbeitung, mit einem Sicherheitskern umfassend einen Kernprozessor, sowie hiermit verbunden, einen Kernspeicher und ein Kerninterface, wobei der Kernprozessor dafür eingerichtet ist, Programme/Datensätze über das Kerninterface zu importieren, zu verifizieren und bei erfolgreicher Verifikation im Kernspeicher zu speichern und zu aktivieren. Die Erfindung betrifft des Weiteren ein Betriebsverfahren für ein solches Sicherheitsmoduls sowie die Verwendung eines solchen Sicherheitsmoduls im Rahmen einer Frankiermaschine.

### Stand der Technik und Hintergrund der Erfindung

Frankiermaschinen und Computer mit Frankierfunktion umfassen typischerweise einen Drucker zum Drucken eines Postwertstempels auf ein Postgut, eine Steuereinheit zur Steuerung des Druckers, eine Eingabeeinheit zur manuellen oder elektronischen Eingabe von Geldwerten der Postwertstempel und eine Abrecheneinheit zur Abrechnung verbrauchter Geldwerte und Berechnung verbleibender Geldwertguthaben, die Postgebührendaten. Postgebührendaten, zumindest Teile des Programmes der Abrechnungseinheit, sowie von der Abrechnungseinheit verwendete Schlüssel und/oder Authentifikationscodes sind sensible Daten, welche vor dem Zugriff (Lesen, Verändern) von unauthorisierten Personen geschützt werden müssen. Sicherheitsmodule in Frankiermaschinen werden auch als Postal Security Devices (PSDs) bezeichnet. Ein Beispiel ist in der Literaturstelle EP 0789 333 A2 beschrieben.

Zum Zwecke dieses Schutzes ist im Rahmen einer Abrecheneinheit ein sogenanntes Sicherheitsmodul eingerichtet, welches eine elektronische Schaltung mit den eingangs genannten Komponenten aufweist. Dabei sind sicherheitsrelevante Daten, beispielsweise kryptographische Schlüsselcodes, in dem Kernspeicher und/oder Schlüsselspeicher gespeichert. In dem Kernspeicher sind des weiteren Firmware für den Kernprozessor sowie sicherheitsrelevante und nichtsicherheitsrelevante Daten gespeichert. Die Schaltung ist des Weiteren mit Mitteln zur Detektion von unauthorisierten Manipulation ausgestattet, wozu beispielsweise und nicht notwendigerweise abschließend Mittel zur Überwachung von Temperatur und Spannung, Sicherheitskontakte und Sicherheitsumhüllung zählen. Die Mittel zur Detektion sind in der Regel mit einer Hilfsenergiequelle verbunden, welche eine Funktion auch ohne die Hauptenergiequelle des Sicherheitsmoduls gewährleistet. Befinden sich beispielsweise Temperatur und/oder Spannung außerhalb eines vorgegebenen Betriebsbereiches, so wird durch die Mittel zur Detektion der Betrieb des Sicherheitsmoduls insgesamt eingestellt, zumindest temporär. Wird mit den Mitteln zur Detektion ein unerlaubter mechanischer Eingriff detektiert, so wird der Betrieb des Sicherheitsmoduls in der Regel sofort und permanent eingestellt, wobei zumindest die Schlüssel in dem Schlüsselspeicher gelöscht werden. Eine bauliche Ausführung von Mitteln zur Detektion eines unauthorisierten Eingriffes ist beispielsweise in der Literaturstelle EP 0 417 447 A2 beschrieben.

Sicherheitsmodule finden weiterhin beispielsweise Anwendung in Geldautomaten, Fahrkartenautomaten, Registrierkassen, Kassensystemen, elektronischen Geldbörsen, Computern, wie PCs, Notebooks, Palmtops, mobilen Telefongeräten ("Handys"), und Geräten, die mehrere solcher Funktionalitäten, ggf. auch einer Frankiermaschine, aufweisen.

Sicherheitsmodule sind auf Grund der Vielzahl der Anwendungsgebiete, wie beispielhaft vorstehend angegeben, in der Regel auf Kernfunktionen begrenzt. Hierzu gehören unter anderem: Zugangsberechtigung zur Verwaltung und Nutzung einer Software (z.B. mittels Passwörtern oder PINs), Schlüsselgenerierung und -speicherung, Schlüsselverwendung (Datenauthentifizierung, Verifizierung -verschlüsselung, und -entschlüsselung), Schlüsselimport und -export.

Sicherheitsmodule können als Multi Chip Module (MCMs), aber auch als Single Chip Module (SCM) ausgeführt sein.

Evaluierte Sicherheitsmodule erhalten ein Prüfzertifikat, das den Versionsstand der Hardware und Firmware dokumentiert und somit die Sicherheit für den betreffenden Entwicklungsstand belegt. Bei Änderungen des Entwicklungstandes wird das Zertifikat ungültig und eine erneute Zertifizierung notwendig. Ein Beispiel eines Evaluierungsstandards ist FIPS 140.

PSDs sind kryptographische Hardware Sicherheitsmodule, die speziell für das postalische Anwendungsgebiet des Frankierens eingesetzt werden. PSDs besitzen viele Funktionen herkömmlicher Sicherheitsmodule, werden jedoch um postalisch relevante Funktionen, wie etwa das sichere Schreiben bzw. Speichern von Geldwerten, das sichere Aufbereiten von Daten zur belegfähigen Abrechnung von Geldwerten, das sichere Nachladen von Geldwertguthaben, sowie Verfahren zur Prüfung der Plausibilität der Datenbestände, erweitert.

Daher sind Sicherheitsmodule entwickelt worden, welche mit Hilfe einer in allen Sicherheitsmodulen vorhandenen Basisfirmware weitere Firmware, welche beispielsweise applikationsabhängig und/oder landesabhängig ist, laden, authentifizieren und ausführen können. Damit wird erreicht, dass beispielsweise für verschiedene Länder in der Produktion einer Frankiermaschine das gleiche Sicherheitsmodul eingesetzt werden kann, welches dann später nach Maßgabe des Einsatzes Firmware-mäßig angepasst wird. Ein Beispiel ist in der Literaturstelle DE 101 37 505 B4 beschrieben. Ein Beispiel für ein Verfahren zum Laden von Daten/Firmware ist in der Literaturstelle DE 10 2004 063 812 A1 angegeben.

Die für Sicherheitsmodule eingesetzte Basisfirmware handelt es sich in der Regel um einfachste, nicht nebenläufige Systeme, die auch kein Betriebssystem benötigen. Dadurch ist der Aufwand bei der Dokumentation sowie der Evaluierung des Quellcodes niedrig. Zwar wäre der Einsatz eines Multi-Threading Betriebssystems sowie das Ausführen von nicht evaluierter Firmware durch das Modul grundsätzlich möglich und auch evaluierbar, der Evaluierungsaufwand und daher die damit verbundenen Kosten wären jedoch vergleichsweise sehr hoch. So muss ein Sicherheitsmodul, das sowohl evaluierte als auch nicht evaluierte Firmware ausführen soll, zum Erhalt seiner Zertifizierung besondere Anforderungen erfüllen. Hierzu und folglich zur Evaluierung, gehören die Trennung der evaluierten und nicht evaluierten Betriebsart (operational mode) und Routinen, die es einer nicht evaluierten Firmware unmöglich machen, auf Daten oder Betriebsmittel der evaluierten Firmware zuzugreifen.

Bei Sicherheitsmodulen zeigt sich einerseits der Trend, die Integration der Hardware zu erhöhen. Dadurch werden Kosten reduziert, aber auch die Sicherheit erhöht, beispielsweise gegen Kontaktierungsversuche oder Analyse des Stromverbrauches oder Strahlungsverhaltens. Zudem wird durch niedrigeren Stromverbrauch die Lebensdauer von oft notwendigen Hilfsenergiequellen erhöht. Dem steht gegenüber die Anforderung der Erhöhung von Variabilität und Funktionalität der Firmware. Resultat ist ein Wachsen des Programmcodes sowie der Datenbasis der Firmware. Letzteres führt sogar zu Problemen, da dies der Anforderung höherer Integration widersprüchlich ist. Zwar sind Single Chip Computer mit geeigneter Peripherie, mathematischer Langzahlunterstützung, Sensoren und Controllern für Aktoren verfügbar, die integrierten Random Access Memorys (RAMs) und Read Only Memorys (ROM) bzw. Flash-Speicher weisen jedoch Kapazitäten auf, die für die erweiterten Funktionalitäten nicht hinreichend sind.

### Technisches Problem der Erfindung

Der Erfindung liegt daher das technische Problem zu Grunde, ein Sicherheitsmodul anzugeben, welches einerseits hinreichende Speicherkapazitäten für erweiterte Funktionalitäten aufweist, andererseits jedoch bei unverändert niedrigem konstruktiven Aufwand und Aufwand der Evaluierung bzw. Zertifizierung nach wie vor hohe Sicherheit aufweist.

### Definitionen

Ein Sicherheitskern ist ein baulicher Bereich, welcher eine Schaltung oder einen Teil einer Schaltung umfasst, wobei die Schaltung mit Mitteln zur Verhinderung und/oder Detektion von unauthorisierten Manipulationen, wie Ausleseversuche, Kontaktierungsversuche, etc., ausgestattet ist. Hierzu gehören Umhüllungen, Vergussmassen, mechanische Sensoren, Temperatursensoren, Stromsensoren, Spannungssensoren, usw.. Eine Umhüllung ist praktisch immer eingerichtet und ein Sicherheitskern bildet insofern eine monolithische bauliche Einheit. Im Sicherheitskern sind Kernprozessor, Kernspeicher und Kerninterface sowie ggf. weitere Komponenten der Schaltung angeordnet.

Ein Sicherheitsmodul umfasst einen Sicherheitskern sowie einen Sicherheitskern-externen Massenspeicher, welcher über ein Kerninterface mit einem Kernprozessor verbunden ist. Dabei kann der Massenspeicher unmittelbar bei dem Sicherheitskern angeordnet sein und hiermit eine bauliche Einheit bilden. Es ist aber auch möglich, dass der Massenspeicher räumlich getrennt vom Sicherheitskern und hiermit über einen Datenleitung (z.B. USB, UART, PCI) oder sogar Datenfernübertragung (z.B. Ethernet) verbunden ist,

Ein Massenspeicher ist ein Speicher, in welchem eine höhere Datenmenge speicherbar ist, als im Kernspeicher. Ein Vielfaches bezeichnet dabei zumindest das Doppelte, umfasst aber auch bis zu das 10-fache, 100-fache, oder mehr.

Programme umfassen in der Regel neben dem eigentlichen Programmcode auch Datensätze. Datensätze umfassen nicht notwendigerweise einen Programmcode.

Partitionierte Programme/Datensätze sind in verschiedene partielle Programmteile/Datensatzteile zerteilt. Beispielsweise können Programme in verschiedene Ablaufstufen partitioniert sein. Auch kann eine regelmäßig wieder benötigte Subroutine einen partiellen Programmteil bilden. Ein partieller Programmteil braucht aber nicht notwendigerweise eine in sich abgeschlossene Funktionalität aufzuweisen. Datensätze können grundsätzlich beliebig partitioniert werden, wobei verschiedene, jedoch ablaufnah durch einen Programmcode benötigte Daten zweckmäßigerweise einen partiellen Datensatzteil bilden.

Eine Authentisierung umfasst das datentechnische Verbinden eines Programms/Datensatzes mit einem Authentisierungscode. Dieser ist für das betreffende Programm bzw. den betreffenden Datensatz individuell, da er aus dessen Inhalten gebildet wird, wobei bei der Bildung ein vorgegebener Schlüsselcode zur Anwendung kommt.

Eine Verifikation umfasst typischerweise die Prüfung eines authentisierten Programmes/Datensatzes mittels eines Schlüsselcodes auf Übereinstimmung bezüglich des Authentisierungscodes. Wird der Authentisierungscode eines mit dem Authentisierungscode versehene Programmes/Datensatzes mittels des gleichen Schlüssels einer zur Authentisierung inversen Operation unterzogen, so kann aus der Übereinstimmung des Authentisierungscodes des Programmes und eines abgespeicherten Authentisierungscodes die Authentizität bestimmt und so das Programm/der Datensatz verifiziert werden. Bekannte Authentisierungscodes umfassen beispielsweise den Message Authentication Code (MAC), z.B. basierend auf dem AES-Algorithmus.

Eine Verschlüsselung umfasst eine Transformation eines Programmes/Datensatzes mittels eine Schlüsselcodes. Nach Verschlüsselung ist ein Programm/Datensatz nicht benutzbar. Zur Nutzbarmachung ist eine Entschlüsselung mittels des Schlüsselcodes oder eine hiermit korrelierten verschiedenen Entschlüsselungscodes notwendig, wobei die Transformation revidiert wird. Ein Schlüsselcode zur Verschlüsselung oder Entschlüsselung kann beispielsweise ein public key, z.B. mit PKI Zertifikat, sein.

Ein Hash-Wert ist eine meist natürliche Zahl, welche aus einer Datenfolge bzw. Zeichenfolge als Quellmenge mittels einer Hash-Funktion bestimmt wird und eine (deutlich) geringere Größe als die Quellmenge aufweist. Es handelt sich also im Kern um eine Datenreduktion, wobei eine eineindeutige Zuordnung von Hash-Wert und Quellmenge nicht möglich ist, jedoch ein Vergleich der Hash-Werte von Quellmengen bei Identität des Hash-Wertes mit hoher Wahrscheinlichkeit für die Identität der Quellmengen steht. Im kryptologischen Bereich sind idealerweise die Möglichkeiten sogenannter Kollisionen (Wahrscheinlichkeit verschiedener Quellmengen bei gleichem Hash-Wert) reduziert bis ausgeschlossen. Eine inverse Berechnung (Quellmenge aus dem Hash-Wert) ist nicht in effizienter Weise möglich. Beispiele für Hash-Funktionen sind: Divisions-Rest-Method, Doppel-Hashing, Multiplikative Methode, Mittquadratmethode, Zerlegungsmethode, Ziffernanalyse, Quersumme. Beispiele für Hash-Algorithmen sind: Adler-32, Hashtabelle, Merkles Meta-Verfahren, Modulo-Verfahren, Parität, Prüfsumme, Prüfziffer, Quersumme, Salted Hash, Zyklische Redundanzprüfung, MD2, MD4, MD5, SHA, RIPEMD-160, TIGER, HAVAL, Whirlpool.

Ein Schlüsselspeicher ist ein Speicherbereich, optional baulich vom Kernspeicher getrennt, jedoch innerhalb des Sicherheitskernes angeordnet, in welchem kryptographische Schlüsselcodes, und/oder Authentisierungscodes permanent gespeichert sind. Eine unauthorisierte Änderung der Speicherinhalte eines Schlüsselspeichers ist nicht möglich, nur deren Löschung, beispielsweise in Verfolg eines unauthorisierten Zugriffs in den Sicherheitskern.

Eine Memory Management Unit (MMU) dient der Umrechnung (Translation) einer angeforderten virtuellen (logischen) Adresse in eine physikalische (Speicher-) Adresse. Eine MMU umfasst typischerweise einen meist als Cache Speicher ausgebildeten Translation Lookaside Buffer (TLB), welcher jeweils die letzten Adressumrechnungen in Form einer Tabelle abspeichert. Die Arten der Adresstranslation werden nach den Arten der verwendeten Seitentabellen unterschieden, einer logischen Adresse muss nicht immer notwendigerweise eine physikalische Adresse zugeordnet sein. Wird eine solche Adresse angesprochen erfolgt ein sogenannter Seitenfehler (Exception), woraufhin die Firmware eine in dem Massenspeicher gespeicherte und so aus dem Sicherheitskern ausgelagerte Programmdatei oder Datendatei in der in der Beschreibung im einzelnen beschriebenen Weise lädt.

Ein Cache Speicher ist ein Puffer-Speicher, in welchem Kopien von Daten eines anderen Speichers temporär enthalten sind, wodurch der Zugriff auf die Daten beschleunigt wird.

Firmware ist sogenannte Hardware-nahe Software, welche die elementaren Funktionen zur Steuerung des Kernprozessors und so des Sicherheitsmoduls enthält, einschließlich Eingabe- und Ausgaberoutinen. Im Rahmen der Erfindung gehören hierzu auch Authentifikations- und/oder Verifikationsroutinen sowie Verschlüsselungs- und Entschlüsselungsroutinen. Firmware ist stets im Sicherheitskern gespeichert, und zwar dauerhaft. Sie ist nicht ohne Weiteres veränderbar. Demgegenüber sind Programme/Datensätze zur Programmausführung nachgeordnet und bilden die eigentliche Software.

Sektionen sind Programm- bzw. Datenabschnitte, die durch einen Linker zusammengefügt sind. Programmcode-Sektionen umfassen CODE oder TEXT als ausführbares Programm, sowie ggf. INIT und FINI als Initialisierungteil oder Finalisierungsteil des ausführbaren Programms. Datencode-Sektionen DATA, RODATA, oder BSS enthalten Daten des Programms. Die Daten einer DATA Sektion sind zur Laufzeit des Programmes veränderbar auch flüchtige Daten genannt). Die Daten einer RODATA Sektion sind unveränderbar (Read Only, auch nicht-flüchtige oder persistente Daten genannt). Die Daten einer BSS Sektion enthalten nullinitialisierte Daten.

Komprimierte Daten sind Datensätze, deren Umfang mittels eines Komprimierungsalgorithmus reduziert ist, also weniger Speicherraum als die korrelierten, nichtkomprimierten Daten benötigen. Komprimierte Daten werden mit einem zum Komprimierungsalgorithmus inversen Dekomprimierungsalgorithmus wieder dekomprimiert, i.e. der ursprünglich Datensatz wird wiederhergestellt. Komprimierungs- und Dekomprimierungsalgorithmen sind dem Fachmann gut vertraut und bedürfen daher keiner näheren Erläuterung.

Sicherheitskritische Daten sind Daten, deren Veränderung und/oder Auslesung durch unauthorisierten Zugriff verhindert werden muss. Ein Beispiel sicherheitskritische Daten sind Daten zu Geldwerten, insbesondere Geldwertguthaben.

Grundzüge der Erfindung und bevorzugte Ausführungsformen.

Die Erfindung ist dadurch gekennzeichnet, dass der Sicherheitskern über das Kerninterface mit einem außerhalb des Sicherheitskernes angeordneten Massenspeicher des Sicherheitsmoduls verbunden ist, wobei die Speicherkapazität des Massenspeichers ein Vielfaches der Speicherkapazität des Kernspeichers beträgt, dass der Kernprozessor dazu eingerichtet ist, in den Massenspeicher geladene Programme/Datensätze für eine Programmausführung partitioniert in den Kernspeicher zu importieren, zu verifizieren und zu aktivieren, und dass der Kernprozessor dafür eingerichtet ist, für die Programmausführung nicht benötigte und in dem Kernspeicher gespeicherte partitionierte Programme/Datensätze in den Massenspeicher nach Authentisierung zu exportieren und/oder im Kernspeicher zu löschen.

Mit der Erfindung wird erreicht, dass der Kernspeicher nur mit Speicherinhalten belastet wird, die zur Programmausführung im Augenblick benötigt werden, während augenblicklich nicht benötigte Speicherinhalte im Falle von benötigter Speicherkapazität neu mit benötigten Speicherinhalten belegt werden. Dabei sind die im Kernspeicher gespeicherten Speicherinhalte stets von der Firmware im Sicherheitskern verifiziert worden. Im Ergebnis lassen sich Programme im Sicherheitskern und unter den evaluierten Bedingungen der Sicherheit ausführen, wobei der gesamte Speicherbedarf der Programme erheblich höher ist als die Kapazität des Kernspeichers. Zudem lassen sich bei unverändertem Sicherheitskern und darin enthaltener Firmware verschiedene Programmausführungen in dem Massenspeicher speichern und (verifiziert) zur Ausführung bringen, so dass das Sicherheitsmodul nicht für verschiedene Programmausführungen erneut oder separat evaluiert und zertifiziert werden muss. Im Ergebnis wird durch die Kombination von hoher Integration bei gleichzeitig niedrigen Evaluierungsaufwand und hoher Programmvariablität eine erhebliche Verbesserung der Herstellungskosten bei gleichbleibend hoher Sicherheit erreicht.

Im Rahmen der Erfindung können verschiedene Weiterbildungen baulicher und/oder funktioneller Natur vorgesehen sein.

In der Regel wird es vorgesehen sein, dass im Sicherheitskern ein mit dem Kernprozessor verbundener Schlüsselspeicher mit zumindest einem darin gespeicherten kryptographischen Schlüssel zur Entschlüsselung und/oder Verschlüsselung von Datensätzen eingerichtet ist. Dann ist der Kernprozessor zur Entschlüsselung von importierten Programmen/Datensätzen und zur Verschlüsselung von exportierten Programmen/Datensätzen eingerichtet. Dies kann zusätzlich zu einer Authentifikation/Verifikation erfolgen.

Der Kernspeicher umfasst vorzugsweise einen RAM-Speicher sowie einen Flash-Speicher, wobei der RAM-Speicher und der Flash-Speicher typischerweise mit dem Kernprozessor über eine Memory Management Unit (MMU) und/oder einen Translation Lookaside Buffer (TLB) verbunden sind.

Der Sicherheitskern ist mit Mitteln zur Detektion von unauthorisierten Manipulationen ausgestattet ist, welche mit dem Kernprozessor und/oder dem Schlüsselspeicher verbunden sind, wobei der Prozessor und/oder der Schlüsselspeicher optional dazu eingerichtet ist, bei Detektion einer unauthorisierten Manipulation zumindest den Schlüsselspeicher zu löschen. Diese Mittel sind dem Fachmann im Einzelnen gut bekannt und brauchen hier nicht im Einzelnen erläutert zu werden.

Der Massenspeicher umfasst vorzugsweise einen Non-Volatile Random Access Memory (NVRAM) und/oder einen Random Access Memory (RAM), insbesondere einen Massen-Flash-Speicher.

Das Kerninterface und/oder der Massenspeicher werden typischerweise eine Schnittstelle aufweisen, welche (auch) zum Laden von Programmen/Datensätzen aus Sicherheitsmodul-externen Datenverarbeitungseinrichtungen eingerichtet ist.

In funktioneller Hinsicht kann der Kernprozessor zur Ausführung der folgenden Verfahrensschritte zur Transformation von Programmen/Datensätzen eingerichtet sein:
a) ein Programm/Datensatz, vorzugsweise authentisiert, wird in den Massenspeicher geladen,
b) es erfolgt ein Analyse von Sektionen des Programms/Daten auf Programmcode und Daten, der Daten optional auf flüchtige Daten, persistente Daten, komprimierte Daten, nicht-initialisierte Daten, initialisierte Daten und sicherheitskritische Daten,
c) Partitionierung der Sektionen in Seiten, wobei für jede Seite ein Seiten-individueller Authentisierungscode mit Hilfe eines im Schlüsselspeicher gespeicherten Schlüsselcodes gebildet und der jeweiligen Seite zugeordnet, mit der jeweiligen Seite verbunden und zusätzlich separat im Kernspeicher in einer Codetabelle gespeichert wird,
d) Kopieren, ggf. nach Dekomprimierung und/oder Initialisierung, der mit dem Seiten-individuellen Authentisierungscode verbundenen Seiten in freie physikalische Adressbereiche des Massenspeichers, und
e) optional, Verifikation des in Stufe a) geladenen Programms/Datensatzes.

Der Kernprozessor kann des Weiteren zur Ausführung der folgenden weiteren Verfahrensschritte eingerichtet sein:
f) die MMU und/oder der TLB werden mit der Maßgabe konfiguriert, dass die Ausführung, das Lesen, oder das Schreiben von virtuellen Adressen eines transformierten Programmes zu einer Exception führt, wobei eine Exception dadurch charakterisiert ist, dass der TLB keinen Eintrag für einer virtuelle Adresse enthält, und dass im Falle einer Exception mittels der virtuellen Adresse und der Codetabelle eine zu importierende Seite identifiziert, aus dem Massenspeicher importiert, mittels des Authentifizierungscodes verifiziert, optional entschlüsselt, und bei erfolgreicher Verifikation in den Kernspeicher zur Programmausführung gespeichert wird, und
g) im TLB wird ein Eintrag gespeichert, mittels welchem eine Exception für die virtuelle Adressen des Adressraumes der importierten Seite unterbunden wird.

Im Falle keiner freien Einträge im TLB können die folgenden Verfahrensschritte ausgeführt werden:
h) es wird im Kernspeicher eine Seite identifiziert, welche für die Programmausführung nicht benötigt wird, und
i) die nicht benötigte Seite wird in dem Kernspeicher gelöscht oder nach einer Authentifikation in den Massenspeicher exportiert.

Bei dem Import und oder bei dem Export einer Seite und/oder einer Sektion kann die betreffende Seite oder Sektion mit einem Laufnummerindex versehen werden, wobei der Laufnummerindex mit einer Zuordnung zur Seite oder Sektion im Kernspeicher gespeichert wird. Dann kann vorgesehen sein, bei einem erneuten Import der Seite oder Sektion der Laufnummerindex analysiert und mit dem gespeicherten zugeordneten Laufnummerindex verglichen wird. Bei positivem Vergleich (Identität) wird dann die Sektion bzw. Seite gelöscht. Bei negativem Vergleich wird dann der Seite bzw. Sektion ein neuer Laufnummerindex zugeordnet und gespeichert. Dadurch wird letztendlich erreicht, dass keine bereits einmal importierten Daten bei nochmaligem Import wieder verwendet werden. Dies ist beispielsweise wichtig im Falle von sicherheitskritischen veränderlichen Daten, die im Zuge einer Programmausführung importiert, genutzt und verändert werden, wie beispielsweise Geldwertdaten, da dadurch die erneute Verwendung von alten, nicht mehr aktuellen Daten verhindert wird.

Im Wesentlichen werden insbesondere die folgenden funktionalen Merkmale realisiert. Es wird sichergestellt, dass ein Programmcode ausschließlich im Sicherheitskern, i.e. aus dem Kernspeicher, ausgeführt wird. Daten und Zustände werden ausschließlich im Sicherheitskern, i.e. im Kernspeicher, verarbeitet. Programmcodes, welche aus dem Massenspeicher in den Sicherheitskern importiert werden, sind authentisiert und werden vor der Ausführung verifiziert. Sicherheitskritische Daten, welche aus dem Massenspeicher importiert werden, sind in der Regel verschlüsselt und authentisiert und werden vor der Verwendung im Sicherheitskern entschlüsselt und verifiziert. Nicht-sicherheitskritische Daten, welche aus dem Massenspeicher importiert werden, sind in der Regel nicht verschlüsselt, jedoch authentisiert und werden vor der Ausführung verifiziert. Hierzu werden ausschließlich im Sicherheitskern durch den Sicherheitsprozessor und die Firmware die Schlüsselcodes zum Authentifizieren, Verifizieren, Entschlüsseln und Verschlüsseln generiert und verwaltet. Auch eine Generierung von solchen Schlüsselcodes erfolgt ausschließlich im Sicherheitskern.

Die Erfindung betrifft des Weiteren ein Betriebsverfahren für ein erfindungsgemäßes Sicherheitsmoduls mit den vorstehend beschriebenen funktionalen Schritten.

Schließlich umfasst die Erfindung die Verwendung eines solchen Sicherheitsmoduls in einer Frankiermaschine oder einem Computer mit Frankierfunktion, wobei das erfindungsgemäße Verfahren ausgeführt wird, und wobei die Datensätze Daten zu Geldwertguthaben und verbrauchten Geldwerten umfassen.

Im folgenden wird die Erfindung anhand von lediglich Ausführungsformen darstellenden Figuren näher erläutert.
Es zeigen:
- Figur 1:: einen schematischen Aufbau eines erfindungsgemäßen Sicherheitsmoduls,
- Figur 2:: ein Ablaufschema für eine Transformation eines in den Massenspeicher eingelesenen und zu verifizierenden Programms/Datensatzes,
- Figur 3:: Ausführung des gemäß Figur 2 transformierten Programms

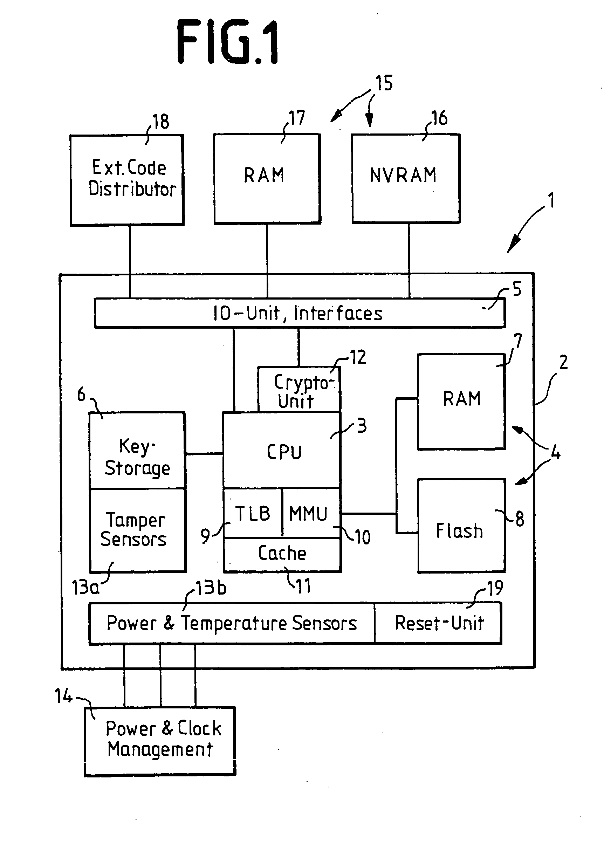

In der Figur 1 erkennt man, dass das Sicherheitsmodul 1 einen Sicherheitskern 2 mit einem Kernprozessor 3, einen Kernspeicher 4 und ein Kerninterface 5 aufweist. Mit dem Kernprozessor 3 ist ein Schlüsselspeicher 6 verbunden. Der Kernspeicher 4 weist einen RAM-Speicher 7 und einen Flash-Speicher 8 auf. Im Rahmen des Kernprozessors 3 sind ein TLB 9, eine MMU 10 und ein Cache 11 eingerichtet, welche in üblicher Weise mit dem Kernspeicher 4 verbunden sind. Im Rahmen des Kernprozessors 3 ist des Weiteren eine Einheit 12 zur Ent- und Verschlüsselung von Programmen/Datensätzen vorgesehen. Im Sicherheitskern 2 sind schließlich Mittel 13a, 13b zur Detektion von unauthorisierten Manipulationen vorgesehen. Der Schlüsselspeicher 6 ist mit einer eigenen Sicherheitskerninternen Stromversorgung ausgestattet. Wird durch die Mittel 13a, 13b zur Detektion von unauthorisierten Manipulationen eine solche Manipulation detektiert, so werden in dem Schlüsselspeicher 6 gespeicherte Schlüsselcodes beispielsweise mittels eine Reset-Einheit 19 automatisch gelöscht. Ansonsten wird der Sicherheitskern 2 extern von einer Strom- und Taktversorgung 14 versorgt. Innerhalb der Sicherheitsmoduls 1, jedoch außerhalb des Sicherheitskernes 2 ist ein Massenspeicher 15 vorgesehen, welcher mit dem Kerninterface 5 verbunden ist. Der Massenspeicher 15 umfasst im Ausführungsbeispiel einen NVRAM 16 und einen RAM 17, insbesondere einen Massen-Flash-Speicher. Über eine Schnittstelle 18 können von außerhalb, beispielsweise durch Datenfernübertragung, Programme/Datensätze in den Massenspeicher 15 und/oder den Sicherheitskern 2 geladen werden.

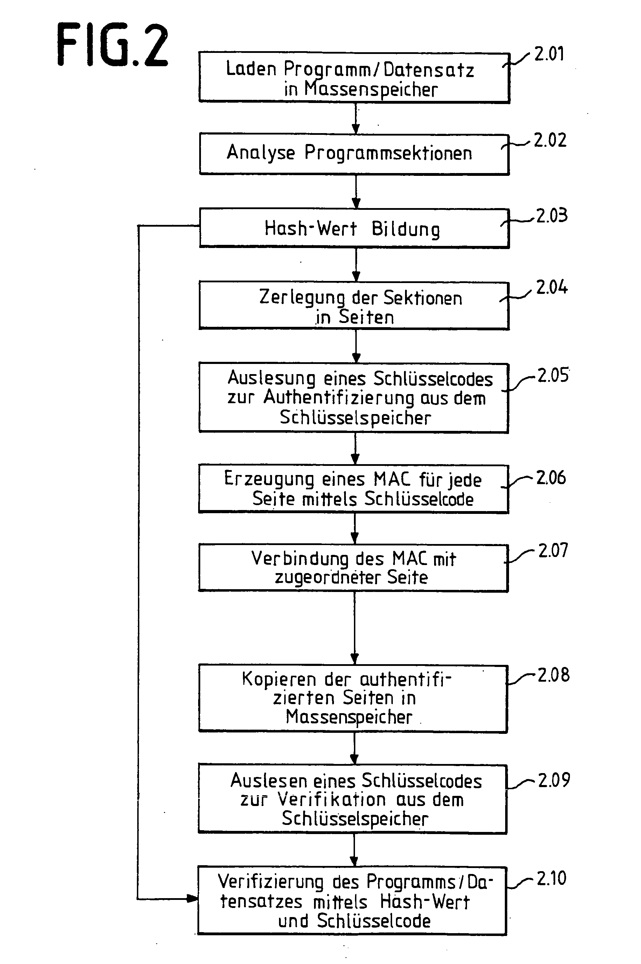

Figur 2 zeigt ein Ablaufschema für eine Transformation eines in den Massenspeicher 15 eingelesenen und zu verifizierenden Programms/Datensatzes. In Stufe 2.01 erfolgt ein Einlesen eines extern verfügbaren Programmcodes nebst Daten in den RAM 17 des Massenspeichers 15. Dies kann parallel oder sequentiell erfolgen. In Stufe 2.02 erfolgt mittels des Kernprozessors 3 eine Analyse der im RAM 17 gespeicherten Sektionen des Programms auf flüchtige Daten, persistente Daten, nicht-initialisierte Daten, initialisierte Daten, sicherheitskritische Daten und ausführbarer Programmcode. Im Rahmen der Analyse erfolgt in Stufe 2.03 die Bildung eines Hash-Wertes aus dem Programm/Datensatz insgesamt, welcher dann in Stufe 2.10 zur Verifizierung des Programms/Datensatzes genutzt wird. In Stufe 2.04 werden die Sektionen in Seiten partitioniert, wobei nach Auslesung eines Schlüsselcodes aus dem Schlüsselspeicher 6 in Stufe 2.05 in Stufe 2.06 mittels dieses Schlüsselcodes für jede Seite ein MAC gebildet wird. Jeder MAC wird dann in Stufe 2.07 mit seiner Seite verbunden. In Stufe 2.08 werden die mit jeweils ihrem MAC versehenen Seiten im Massenspeicher 4 gespeichert. In Stufe 2.09 erfolgt eine Auslesung eines Schlüsselcodes zur Verifikation aus dem Schlüsselspeicher 6, woraufhin in Stufe 2.10 mit diesem Schlüssel und dem Hash-Wert aus Stufe 2.03 eine Verifikation des Programms/Datensatzes erfolgt. Bei negativer Verifikation erfolgt eine Löschung aller Seiten.

Bei der vorstehenden Transformation ist eine Tabelle entstanden, deren Einträge aus den MACs bzw. den jeweiligen Authentisierungsdaten der Seiten bestehen. Diese Tabelle ist im Kernspeicher 4 abgespeichert. Ein Authentisierungsdatensatz kann beispielsweise die folgenden Elemente aufweisen: MAC (16 Byte), physikalische Adresse und Sektionsoptionen (4 Byte), virtuelle Adresse und Zugriffseigenschaften (4 Byte). Die Summe der Größe beträgt dann 24 Byte. Bei einer Programmgröße von 4 MB und einer Seitengröße von 4 kB ergibt sich eine Tabellengröße von 1000 (4 MB/4 kB) * 24 Byte = 24 kB. Zur Optimierung des Kernspeichers 4 kann diese Tabelle im Flash-Speicher gespeichert werden, da sich der Programmcode selten ändert.

Bei einer Quelldatensatzgröße von 256 kB ergibt sich in analoger Weise eine Tabellengröße von 1,536 kB. Die Tabelle der Datensätze ist in der Regel vergleichsweise klein und muss allerdings auch regelmäßig aktualisiert werden, da sich die Daten während der Programmausführung ändern können.

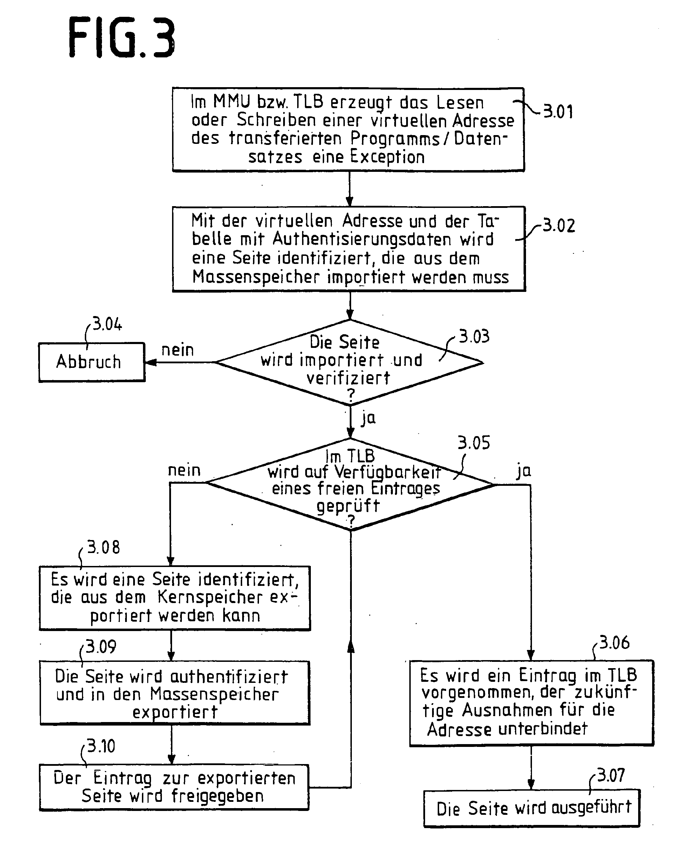

Anschließend an die Transformation erfolgt gemäß der Figur 3 der Import und die Ausführung des transformierten Programms bzw. einer Seite. Zunächst wird in Stufe 3.01 im MMU 10 bzw. TLB 9 durch das Lesen oder Schreiben einer virtuellen Adresse eine Exception erzeugt. Hierzu sind die MMU 10 bzw. TLB entsprechend konfiguriert. Dann wird in Stufe 3.02 mit der virtuellen Adresse und der vorstehend erläuterten Tabelle mit Authentisierungsdaten die Seite gesucht, welche gemäß der virtuellen Adresse zur Ausführung des Programmes importiert werden muss. In Stufe 3.03 wird die betreffende Seite gemäß den Sektionsoptionen der Authentisierungsdaten behandelt und importiert, wobei eine Verifizierung erfolgt, ggf. verbunden mit einer Entschlüsselung. Ist die Verifizierung erfolglos, so erfolgt gemäß Stufe 3.04 ein Abbruch. Ansonsten wird im TLB 9 nach einem freien Eintrag gesucht (Stufe 3.05). Besteht ein solcher, so wird in Stufe 3.06 ein Eintrag vorgenommen, welcher zukünftige Exceptions für die virtuelle Adresse unterbindet. Dann erfolgt in Stufe 3.07 die Ausführung der Seite. Wird in Stufe 3.05 kein freier Eintrag im TLB 9 identifiziert, so wird zunächst in Stufe 3.08 eine Seite identifiziert, welche aus dem Speicher exportiert werden kann, da augenblicklich zur Ausführung des Programms nicht benötigt. In Stufe 3.09 wird diese dann authentifiziert und in den Massenspeicher 15 exportiert. Der zugehörige Eintrag wird dann in Stufe 3.10 freigegeben, so dass die Prüfung im TLB in Stufe 3.05 nunmehr positiv ausfällt usw.

Bei dem Export von Seiten kann dabei mit Verfahren gearbeitet werden, welche aus der Verwaltung von Cache Strukturen bekannt sind. Da Exporte von Seiten aus dem Sicherheitskern zeitintensiv sind, ist eine Write-Back-Strategie der modifizierten Seiten zu bevorzugen, sofern die betroffenen Daten nicht persistent sind. Je nach Sektionsoptionen können die folgenden Regeln Anwendung finden. Codesegmente werden einfach gelöscht, da eine invariante Kopie im Massenspeicher 15 stets verfügbar ist. Sicherheitskritische Daten werden zunächst verschlüsselt exportiert und ihre Authentisierungsdaten aktualisiert.

Bei nicht-sicherheitsrelevanten veränderlichen Daten kann die Verschlüsselung entfallen. Der Import und der Export von Seiten sowie die Aktualisierung von Authentisierungsdaten erfolgt monolithisch, i.e. ohne Interruptmöglichkeit, aber nicht als Transaktion. Persistente Daten werden grundsätzlich explizit gelesen und geschrieben bzw. importiert oder exportiert. Modifikationen finden ausschließlich auf RAM-Kopien statt.

Im Rahmen der Funktionalität des Sicherheitskernes 2 kann im übrigen vorgesehen sein, dass im Massenspeicher 15 gespeicherte Programme/Datensätze ausgewechselt werden können. Hierbei wird beispielsweise ein Übertragungsprotokoll zwischen dem Sicherheitskern und einem Sicherheitsmodul-externen System verwendet, das z.B. das Programmieren des externen Massenspeichers 15 mit Firmware umsetzt. Solche Routinen sind aus den Literaturstellen DE 101 37 505 B4 und DE 10 2004 063 812 A1 bekannt.

Schließlich ist es möglich, einen Watchdog-Timer vom Sicherheitskern 2 aus zu initialisieren und kontinuierlich zurückzusetzen, so dass im Falle eines Fehlers der Hardware oder Firmware das Sicherheitsmodul 1 in einen definierten Fehlerzustand versetzt wird, z.B. Reset der Hardware und Signalisierung des Zustandes. Die Funktionen zur Fehlersignalisierung (z.B. optisch über LEDs oder dergleichen) sind ebenfalls im Sicherheitskern implementiert. Fehler sind z.B.: es existiert keine Adressübersetzung für eine referenzierte virtuelle Adresse, es soll auf eine Seite mit einem Schreibschutz (beispielsweise weil es sich um ein Programmcode-Segment handelt) geschrieben werden, oder ein kryptographischer Schlüsselcode ist nicht vorhanden.

## Patentansprüche

1. Sicherheitsmodul (1) für die elektronische Datenverarbeitung,
mit einem Sicherheitskern (2) umfassend einen Kernprozessor (3), sowie hiermit verbunden, einen Kernspeicher (4) und ein Kerninterface (5),
wobei der Kernprozessor (3) dafür eingerichtet ist, Programme/Datensätze über das Kerninterface (5) zu importieren, zu verifizieren und bei erfolgreicher Verifikation im Kernspeicher (4) zu speichern und zu aktivieren,
**dadurch gekennzeichnet,**
**dass** der Sicherheitskern (2) über das Kerninterface (5) mit einem außerhalb des Sicherheitskernes (2) angeordneten Massenspeicher (15) des Sicherheitsmoduls (1) verbunden ist, wobei die Speicherkapazität des Massenspeichers (15) ein Vielfaches der Speicherkapazität des Kernspeichers (4) beträgt,
**dass** der Kernprozessor (3) dazu eingerichtet ist, in den Massenspeicher (15) geladene Programme/Datensätze für eine Programmausführung partitioniert in den Kernspeicher (4) zu importieren, zu verifizieren und zu aktivieren, und
**dass** der Kernprozessor (3) dafür eingerichtet ist, für die Programmausführung nicht benötigte und in dem Kernspeicher (4) gespeicherte partitionierte Programme/Datensätze zu authentifizieren und in den Massenspeicher (15) zu exportieren und/oder im Kernspeicher (4) zu löschen.

2. Sicherheitsmodul (1) nach Anspruch 1, **dadurch gekennzeichnet,**
**dass** im Sicherheitskern (2) ein mit dem Kernprozessor (3) verbundener Schlüsselspeicher (6) mit zumindest einem darin gespeicherten kryptographischen Schlüssel zur Entschlüsselung und/oder Verschlüsselung von Datensätzen eingerichtet ist und/oder
**dass** der Kernprozessor (3) zur Entschlüsselung von importierten Programmen/Datensätzen und zur Verschlüsselung von exportierten Programmen/Datensätzen eingerichtet ist und/oder
**dass** der Kernspeicher (4) ein RAM-Speicher (7) sowie einen Flash-Speicher (8) umfasst, wobei der RAM-Speicher (7) und der Flash-Speicher (8) optional mit dem Kernprozessor (3) über eine Memory Management Unit (10, MMU) und/oder einen Translation Lookaside Buffer (9, TLB) verbunden sind und/oder
**dass** der Sicherheitskern (2) mit Mitteln (13a, 13b) zur Detektion von unauthorisierten Manipulationen ausgestattet ist, welche mit dem Kernprozessor (3) und/oder dem Schlüsselspeicher (6) verbunden sind, wobei der Kernprozessor (3) und/oder der Schlüsselspeicher (6) optional dazu eingerichtet ist, bei Detektion einer unauthorisierten Manipulation zumindest dem Schlüsselspeicher (6) gespeicherte Schlüsselcodes zu löschen und/oder
**dass** der Massenspeicher (15) einen Non-Volatile Random Access Memory (16) und/oder einen Random Access Memory (17), insbesondere einen Massen-Flash-Speicher, umfasst.

3. Sicherheitsmodul (1) nach einem der Ansprüche 1 oder 2, **dadurch gekennzeichnet, dass** das Kerninterface (5) und/oder der Massenspeicher (15) eine Schnittstelle (18) aufweist, welche zum Laden von Programmen/Datensätzen aus Sicherheitsmodul-externen Datenverarbeitungseinrichtungen eingerichtet ist.

4. Sicherheitsmodul (1) nach einem der Ansprüche 1 bis 3, **dadurch gekennzeichnet, dass** der Kernprozessor (3) zur Ausführung der folgenden Verfahrensschritte zur Transformation von Programmen/Datensätzen eingerichtet ist:
a) ein Programm/Datensatz, vorzugsweise authentisiert, wird in den Massenspeicher (15) geladen,
b) es erfolgt eine Analyse von Sektionen des Programms/Datensätze auf Programmcode und Daten, der Daten optional auf flüchtige Daten, persistente Daten, komprimierte Daten, nicht-initialisierte Daten, initialisierte Daten und sicherheitskritische Daten,
c) Partitionierung der Sektionen in Seiten, wobei für jede Seite ein Seiten-individueller Authentisierungscode mit Hilfe eines im Schlüsselspeicher gespeicherten Schlüsselcodes gebildet und der jeweiligen Seite zugeordnet, mit der jeweiligen Seite verbunden und zusätzlich separat im Kernspeicher (4) in einer Codetabelle gespeichert wird,
d) Kopieren, ggf. nach Dekomprimierung und/oder Initialisierung, der mit dem Seiten-individuellen Authentisierungscode verbundenen Seiten in freie physikalische Adressbereiche des Massenspeichers (15), und
e) optional, Verifikation des in Stufe a) geladenen Programms/Datensatzes.

5. Sicherheitsmodul (1) nach Anspruch 4, **dadurch gekennzeichnet, dass** der Kernprozessor (3) zur Ausführung der folgenden weiteren Verfahrensschritte eingerichtet ist:
f) die MMU (10) und/oder der TLB (9) werden mit der Maßgabe konfiguriert, dass die Ausführung, das Lesen, oder das Schreiben von virtuellen Adressen eines transformierten Programmes zu einer Exception führt, wobei eine Exception **dadurch** charakterisiert ist, dass der TLB (9) keinen Eintrag für einer virtuelle Adresse enthält, und dass im Falle einer Exception mittels der virtuellen Adresse und der Codetabelle eine zu importierende Seite identifiziert, aus dem Massenspeicher (15) importiert, mittels des Authentifizierungscodes verifiziert, optional entschlüsselt, und bei erfolgreicher Verifikation in den Kernspeicher (4) zur Programmausführung gespeichert wird, und
g) im TLB (9) wird ein Eintrag gespeichert, mittels welchem eine Exception für die virtuelle Adressen des Adressraumes der importierten Seite unterbunden wird.

6. Sicherheitsmodul (1) nach Anspruch 4 oder 15, **dadurch gekennzeichnet, dass** im Falle keiner freien Einträge im TLB (9) die folgenden Verfahrensschritte ausgeführt werden:
h) es wird im Kernspeicher (3) eine Seite identifiziert, welche für die Programmausführung nicht benötigt wird, und
i) die nicht benötigte Seite wird in dem Kernspeicher (3) gelöscht oder in den Massenspeicher (15) exportiert, ggf. nach einer Authentifikation.

7. Verfahren zum Betrieb eines Sicherheitsmoduls (1) nach einem der Ansprüche 1 bis 6 mit den folgenden Verfahrensschritten:
a) ein Programm/Datensatz, vorzugsweise authentisiert, wird in den Massenspeicher (15) geladen,
b) es erfolgt ein Analyse von Sektionen des Programms/Daten auf Programmcode und Daten, der Daten optional auf flüchtige Daten, persistente Daten, komprimierte Daten, nicht-initialisierte Daten, initialisierte Daten und sicherheitskritische Daten,
c) Partitionierung der Sektionen in Seiten, wobei für jede Seite ein Seiten-individueller Authentisierungscode mit Hilfe eines im Schlüsselspeicher (6) gespeicherten Schlüsselcodes gebildet und der jeweiligen Seite zugeordnet, mit der jeweiligen Seite verbunden und zusätzlich separat im Kernspeicher (4) in einer Codetabelle gespeichert wird,
d) Kopieren, ggf. nach Dekomprimierung und/oder Initialisierung, der mit dem Seiten-individuellen Authentisierungscode verbundenen Seiten in freie physikalische Adressbereiche des Massenspeichers (15), und
e) optional, Verifikation des in Stufe a) geladenen Programms/Datensatzes.

8. Verfahren nach Anspruch 7 mit den folgenden weiteren Verfahrensschritten:
f) die MMU (10) und/oder der TLB (9) werden mit der Maßgabe konfiguriert, dass die Ausführung, das Lesen, oder das Schreiben von virtuellen Adressen eines transformierten Programmes zu einer Exception führt, wobei eine Exception **dadurch** charakterisiert ist, dass der TLB (9) keinen Eintrag für einer virtuelle Adresse enthält, und dass im Falle einer Exception mittels der virtuellen Adresse und der Codetabelle eine zu importierende Seite identifiziert, aus dem Massenspeicher (15) importiert, mittels des Authentifizierungscodes verifiziert, optional entschlüsselt, und bei erfolgreicher Verifikation in den Kernspeicher (4) zur Programmausführung gespeichert wird, und
g) im TLB (9) wird ein Eintrag gespeichert, mittels welchem eine Exception für die virtuelle Adressen des Adressraumes der importierten Seite unterbunden wird.

9. Verfahren nach Anspruch 8, wobei im Falle keiner freien Einträge im TLB (9) die folgenden Verfahrensschritte ausgeführt werden:
h) es wird im Kernspeicher (4) eine Seite identifiziert, welche für die Programmausführung nicht benötigt wird, und
i) die nicht benötigte Seite wird in dem Kernspeicher (4) gelöscht oder nach einer Authentifikation, optional einer Verschlüsselung, in den Massenspeicher (4) exportiert.

10. Verwendung eines Sicherheitsmoduls (1) nach einem der Ansprüche 1 bis 6 in einer Frankiermaschine oder einem Computer mit Frankierfunktion, wobei ein Verfahren nach einem der Ansprüche 12 bis 14 ausgeführt wird, wobei die Datensätze Daten zu Geldwertguthaben und verbrauchten Geldwerten umfassen.
